# EUROPÄISCHE PATENTSCHRIFT

(11) **EP 2 284 771 B1**
(45) Veröffentlichungstag und Bekanntmachung des Hinweises auf die Patenterteilung: **17.04.2013**
(21) Anmeldenummer: 09167134.7
(22) Anmeldetag: 04.08.2009
(51) Int. Cl.: G06K 19/00

(54) **Vorrichtung zum Einstecken in ein Rechensystem und Rechensystem**
Device for insertion in a calculating system and calculating system
Dispositif d'introduction dans un système informatique et système informatique

(43) Veröffentlichungstag der Anmeldung: 16.02.2011
(73) Patentinhaber: Siemens Aktiengesellschaft, 80333 München (DE)
(72) Erfinder: Kydles, Jens, 90419, Nürnberg (DE); Walter, Markus, 96050, Bamberg (DE)

(56) Entgegenhaltungen:
- US-A1- 2004 134 992

## Beschreibung

Die Erfindung liegt auf dem Fachgebiet von sicherheitsgerichteten Steuerungen, insbesondere Hard- und Software speicherprogrammierbare Steuerungen müssen gemäß den Anforderungen der Norm EN 61508 derart ausgestaltet sein, dass sie eine funktionale Sicherheit erfüllen. Bei sicherheitsbezogenen Systemen, wie speicherprogrammierbare Steuerungen für kritische Prozesse, die elektrische, elektronische oder programmierbare elektronische Komponenten enthalten und deren Ausfall ein maßgebliches Risiko für Mensch oder Umwelt bedeutet, müssen diese für eine besondere Gewährleistung der Sicherheit ausgestaltet sein. Als Beispiele für Anwendungen, welche eine erhöhte Sicherheit erfordern, sind folgende zu nennen: Kernkraftwerke, Leittechnik für Systeme mit sicherheitstechnischer Bedeutung, Bahnanwendungen, Telekommunikationstechnik, Signaltechnik und Datenverarbeitungssysteme, chemische Prozesse, aber auch beispielsweise kleine Anlagen wie eine Stanze zum Ausstanzen von Blechteilen.

In der US 2004/0134992 A1 wird weit ab von dem Stand der Technik bezüglich der Automatisierungstechnik eine Vorrichtung offenbart, welche es ermöglicht einen USB Kartenleser derart zu ertüchtigen, dass er mit einer "full-speed"- oder mit einer "high-speed"-Datenrate mit einem entsprechenden Personal Computer kommunizieren kann.

Neben herkömmlichen speicherprogrammierbaren Steuerungen, wie sie beispielsweise als eine bauliche Einheit mit einem speziellen Systemaufbau zur Steuerung eines industriellen Prozesses ausgestaltet sind, gibt es auch sogenannte Software-SPS's, also speicherprogrammierbare Steuerungen, welche mittels Software nachgebildet sind. Eine solche Soft-SPS umfasst beispielsweise einen PC, vorzugsweise einen Industrie-PC, insbesondere einen PC mit Eingabe-/Ausgabe-Bausteinen oder einer Feldbuserweiterung zur Anbindung, beispielsweise über ein Profibus oder Profinet, von Peripheriegeräten aus dem industriellen Prozess.

Wird eine derartige Soft-SPS für die Steuerung einer der oben genannten sicherkritischen Anlagen eingesetzt, so muss die eingesetzte Hardware sowie die eingesetzte Software die Sicherheitsanforderungen nach der Norm EN 61508 erfüllen. Diese Norm stellt Anforderungen hinsichtlich möglicher Fehler und Ausfälle dar, die während des Betriebs erkannt oder zur Bestimmung des Anteils unkritischer Ausfälle analysiert werden müssen. Zur Erreichung eines hohen Fehleraufdeckungsgrades kann es erforderlich sein, dass eine zweite unabhängige Zeitbasis, die neben einem Systemtakt, welcher durch ein Rechensystem zur Verfügung gestellt wird, zusätzlich zur Verfügung stehen muss. Will der Konstrukteur einer Steuerungsanlage für einen industriellen Prozess nun einen Standard-PC mit einer Software-SPS einsetzen, so unterliegt er aufgrund unterschiedlicher PC-Systeme einer Hardwareabhängigkeit und ist in seinem Einsatz eines Standard-PC-Systems mit einer entsprechenden speicherprogrammierbaren Softwaresteuerung eingeschränkt.

Es ist daher die Aufgabe der Erfindung eine Vorrichtung bereitzustellen, welche es ermöglicht ein Rechensystem mit einer Software zur Nachbildung einer speicherprogrammierbaren Steuerung mit einfachen Mitteln zu einem Rechensystem zur Steuerung von sicherheitskritischen Anwendungen zu erweitern.

Gelöst wird die Aufgabe durch Bereitstellung einer Vorrichtung mit den Merkmalen des Anspruchs 1. Zur Erhöhung des Fehleraufdeckungsgrades existiert nun für ein Rechensystem für einen sicherheitskritischen Prozess neben einer systembedingten Zeitbasis, welche innerhalb des Rechensystems generiert wird, eine zusätzliche Zeitbasis, welche von der Zeitbasis in dem Rechensystem unabhängig ist.

Dabei ist der Mikrokontroller ausgestaltet um einer auf dem Rechensystem ablauffähigen fehlersicheren Software zur Steuerung eines industriellen Prozesses eine von dem Rechensystem unabhängige Zeitbasis zur Verfügung zu stellen. Mit der Vorrichtung ist ein zusätzliches Sicherheitsmodul bereitgestellt, welches eine unabhängige Zeitbasis generiert und diese über den Mikrokontroller dem Rechensystem unabhängig von seiner eigenen Zeitbasis zur Verfügung stellt. Vorteilhafter Weise können so durch Einstecken des zusätzlichen Sicherheitsmoduls in beispielsweise einen beliebigen PC, die Hardwarevoraussetzungen für eine fehlersichere Software-SPS zur Steuerung eines sicherheitskritischen Prozesses geschaffen werden.

Dabei ist das erste Mittel zur Erzeugung des ersten Zeitsignals als ein Quarzoszillator ausgelegt.

Auch ein zweites Mittel zur Erzeugung eines zweiten Zeitsignals ist vorhanden. Durch die Bereitstellung einer zweiten zusätzlichen Zeitbasis auf der Vorrichtung wird eine Zuverlässigkeit für die Anwendung in einem sicherheitskritischen Prozess weiter erhöht. Mit dem zweiten Mittel zur Erzeugung eines zweiten Zeitsignals, welches vorzugsweise als eine Echtzeituhr ausgestaltet ist, wird man unabhängig von der Bildung einer zweiten Zeitbasis über die vorhandenen PC-Komponenten des Rechensystems. Bei beispielsweise einem System Management Interrupt (SMI) innerhalb des Rechensystems wird die Zuverlässigkeit erhöht, da diese System Management Interrupts nun keine Auswirkung auf die Zeitsignale haben, denn beide Zeitsignale werden unabhängig von dem Rechensystem erzeugt.

Eine weitere Ausgestaltung der Vorrichtung sieht vor, dass ein Sicherungsmittel zur Verschlüsselung zumindest des ersten Zeitsignals vorhanden ist. Damit würde eine auf dem Rechensystem installierte fehlersichere Software eine gesteckte Vorrichtung erfordern, welche eben dieses verschlüsselte Zeitsignal bereitstellt. Ein unerlaubtes Vervielfältigen der fehlersicheren Software könnte dadurch hinfällig werden, weil diese fehlersichere Software nur mit dem verschlüsselten Zeitsignal der Vorrichtung zusammenarbeitet.

Um den Gebrauch der fehlersicheren Software nur mit der in das Rechensystem eingesteckten Vorrichtung zu ermöglichen, weist die Vorrichtung weiterhin ein Mittel zum Auslesen eines Lizenzierungsschlüssels auf. Dieses Mittel kann dann für die Software auf dem Rechensystem einen Lizenzcode bereitstellen, welcher zyklisch an der Software abgefragt wird, oder das Mittel ist so ausgestaltet, dass es einen Code aus der Software abfragt.

In einer besonders bevorzugten Ausgestaltung ist das Steckmittel als ein USB-Anschluss ausgestaltet. Der USB-Standard ist bei jedem Computersystem mittlerweile vorhanden und die Vorrichtung kann zur Ergänzung des fehlersicheren Systems einfach über eine PC-Schnittstelle, welche als ein USB-Anschluss ausgelegt ist, in das Rechensystem gesteckt werden. Denkbar sind ebenso andere Schnittstellen, welche das Computersystem bietet.

Eine Handhabung einer solchen Vorrichtung wird deutlich erhöht, wenn diese Vorrichtung ein kompaktes robustes Gehäuse aufweist.

Vorteilhafterweise ist der Speicherbaustein bereits mit einer Software für eine PC-basierte speicherprogrammierbare Steuerung geladen. Da die für die Soft-SPS notwendige Software vollständig auf dem Speicherbaustein der Vorrichtung abgelegt und auch damit ausgeliefert werden kann, ist eine Auslieferung der Software mittels eines zusätzlichen Datenträgers, wie eine DVD, überflüssig geworden. Zukünftig könnte somit ein "Safety-Stick für PC's" als Erweiterungsmodul angeboten werden. Dieses Erweiterungsmodul enthält, die nach der Norm geforderte zweite unabhängige Zeitbasis sowie die notwendige Software. Dieser "Safety-Stick" könnte auch den notwendigen Lizenzschlüssel beinhalten sowie ein Verschlüsselungsmechanismus für das Zeitsignal. So ist neben der Erfüllung der Norm für die Sicherheitstechnik auch zusätzlich noch ein Know-how-Schutz für die auf dem "Safety-Stick" gespeicherte Software realisiert.

Die eingangs genannte Aufgabe wird ebenfalls durch ein Rechensystem ausgestaltet als ein sicherheitsbezogenes Steuerungssystem für einen industriellen Prozess, umfassend eine Software zur Nachbildung einer speicherprogrammierbaren Steuerung mit einer gesteckten Vorrichtung nach einem der Ansprüche 1 bis 10 gelöst. Vorzugsweise weist das Rechensystem ein Verbindungsmittel zur Verbindung von Peripheriegeräten, wie sie in dem industriellen Prozess zu finden sind, auf. Dieses Verbindungsmittel ist vorzugsweise ausgestaltet zum Anschluss an einen Feldbus, wie z.B. ein Profibus oder ein Profinet.

Im Folgenden wird die Erfindung anhand von Ausführungsbeispielen erläutert. Dabei zeigen:
- FIG 1: ein Rechensystem mit einer gesteckten Sicherheitsvor- richtung,
- FIG 2: eine Vorrichtung mit einem ersten Mittel zur Erzeu- gung eines ersten Zeitsignals und
- FIG 3: eine Alternative der Vorrichtung aus FIG 1 mit zu- sätzlich einem zweiten Mittel zur Erzeugung eines zweiten Zeitsignals.

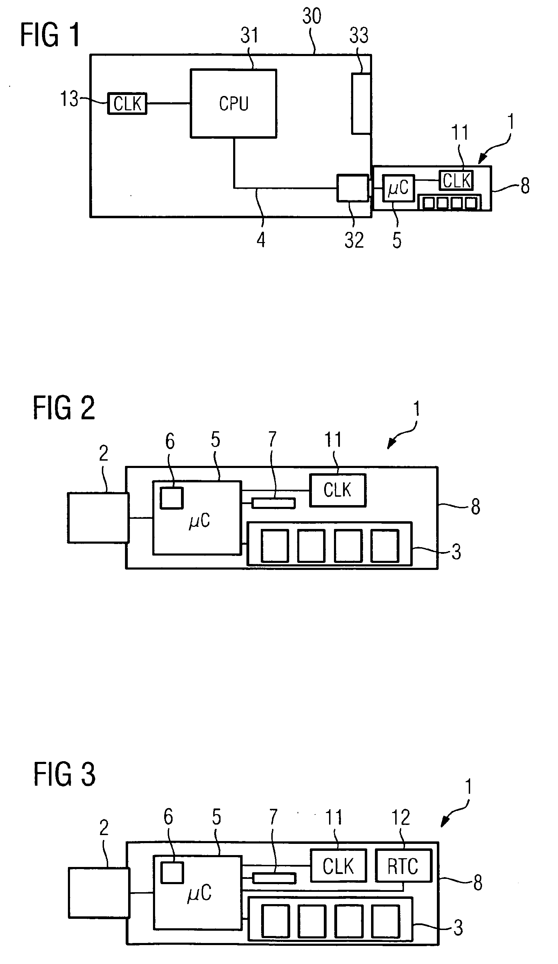

Gemäß FIG 1 ist ein Rechensystem 30 zur Steuerung einer sicherheitskritischen Anlage eines industriellen Prozesses dargestellt. Eine Verbindung zu möglichen Peripheriegeräten des industriellen Prozesses wird über eine Schnittstelle 33 realisiert. Das Rechensystem 30 weist einen Prozessor 31 auf. Im Beispiel ist das Rechensystem 30 ein Standard-PC. Der Prozessor 31 ist die dem Standard-PC zugehörige CPU. Diese CPU ist an einen Systemquarz 13 des Standard-PC's angeschlossen. Weiterhin ist die CPU über ein Bussystem 4 mit einer PC-Schnittstelle 32 verbunden. Diese PC-Schnittstelle 32 ist als eine USB-Schnittstelle ausgelegt. In die PC-Schnittstelle 32 ist eine Vorrichtung 1 gesteckt.

Wie noch näher mit FIG 2 und 3 beschrieben wird, weist die Vorrichtung 1 ein erstes Mittel 11 zur Erzeugung eines ersten Zeitsignals auf. Mit dem ersten Mittel 11 wird in der Vorrichtung 1 eine von dem Systemquarz 13 des Rechensystems 30 unabhängige Zeitbasis bereitgestellt. Diese Zeitbasis wird über einen Mikrokontroller 5 und der USB-Schnittstelle bzw. der PC-Schnittstelle 32 der CPU und somit der auf dem Rechensystem 30 installierten fehlersicheren Software zur Nachbildung einer sicherheitsgerichteten speicherprogrammierbaren Steuerung bereitgestellt. Hierdurch wird eine Standard-PC-Hardware ohne weitere, für die Fehlersicherheit relevante Voraussetzungen, tauglich für einen sicherheitsgerichteten Einsatz in einem industriellen Prozess.

Gemäß FIG 2 ist die Vorrichtung 1 detaillierter dargestellt. Zum Einstecken in das Rechensystem 30 weist die Vorrichtung 1 ein Steckmittel 2 auf. Vorzugsweise ist das Steckmittel 2 ausgestaltet als ein USB-Stecker, es wäre aber ebenso denkbar, dieses Steckmittel 2 für einen PCI-Bus, SCSI, Firewire, oder auch derart auszugestalten, dass das Steckmittel einen WLAN-Sender aufweist und nur zur mechanischen Befestigung in das Rechensystem 30 gesteckt wird.

Die Vorrichtung 1 weist im Wesentlichen ein stabiles, robustes, säurefestes, insbesondere für die rauen Umweltbedingungen in einem industriellen Prozess ausgestaltetes Gehäuse 8 auf. Innerhalb dieses Gehäuses 8 ist ein Mikrokontroller 5 angeordnet. Der Mikrokontroller 5 ist über eine Datenleitung mit dem ersten Mittel 11 zur Erzeugung des ersten Zeitsignales verbunden. Weiterhin weist der Mikrokontroller 5 über eine weitere Datenleitung eine Verbindung zu einem Mittel 7 zum Auslesen eines Lizenzschlüssels auf. Das Mittel 7 kann damit für einen Know-how-Schutz genutzt werden. Um einen möglichen Know-how-Schutz zu verbessern, ist innerhalb des Mikrokontrollers 5 ein Sicherungsmittel 6 integriert. Das Sicherungsmittel 6 ist dazu ausgestaltet, das erste Zeitsignal zu verschlüsseln, damit wird eine zusätzliche Absicherung geschaffen. Das Mittel 7 und das Sicherungsmittel 6 können sowohl zusammen als auch unabhängig voneinander arbeiten bzw. angeordnet sein.

Ein Speicherbaustein 3 bietet ausreichend Speicherplatz um die Software zur Nachbildung einer speicherprogrammierbaren Steuerung aufzunehmen.

Ein weiteres Ausführungsbeispiel ist gemäß FIG 3 dargestellt. Als Unterschied zu der Ausführungsvariante gemäß FIG 2 weist die Vorrichtung 1 ein zweites Mittel 12 zur Erzeugung eines zweiten Zeitsignals auf. Das zweite Mittel 12 ist ebenfalls über eine entsprechende Datenleitung mit dem Mikrokontroller 5 verbunden. In einer vorteilhaften Ausgestaltung ist das erste Mittel 11 als ein Clock CLK, insbesondere als ein Quarzoszillator 13 für den Mikrokontroller 5 und das zweite Mittel 12, als zusätzliche Zeitbasis, als eine Realtimeclock RTC, also als eine Echtzeituhr, ausgestaltet.

Ein üblicher Weise in jedem PC-System vorhandener Systemquarz 13 müsste bei Einsatz der Vorrichtung nach FIG 2 nicht mehr verwendet werden und eine Hardwareunabhängigkeit von dem eingesetzten PC-System wird dadurch weiter erhöht.

Ein weiterer Vorteil ist dabei, dass bei PC-Systemen bei denen eine Reduzierung des Systemtaktes aus energietechnischen Gründen erfolgt, die zweite Zeitbasis der Vorrichtung 1 davon nicht betroffen ist. Eine stabile, zusätzliche diversitäre Zeitbasis ist somit gewährleistet, selbst wenn im Hinblick auf ein Energiesparmodus des Rechensystems 30 der Zeittakt für die CPU des Rechensystems 30 heruntergetaktet wird.

## Patentansprüche

1. Vorrichtung (1) umfassend,
ein Steckmittel (2) zum Einstecken in ein Rechensystem (30), einen Speicherbaustein (3),
wobei über das Steckmittel (2) der Speicherbaustein (3) mit einem Bussystem (4) des Rechensystems (30) verbindbar ist, weiterhin aufweisend einen Mikrokontroller (5) und
ein erstes Mittel (11) zur Erzeugung eines ersten Zeitsignals, welche derart zusammenwirken, dass über das Steckmittel (2) dem Rechensystem (30) das erste Zeitsignal bereitgestellt wird, wobei der Mikrokontroller (5) ausgestaltet ist um einer auf dem Rechensystem (30) ablauffähigen Software eine von dem Rechensystem (30) unabhängige Zeitbasis zur Verfügung zustellen,
**dadurch gekennzeichnet, dass**
der Speicherbaustein (3) eine Software für eine PC-basierte speicherprogrammierbare Steuerung aufweist, wobei weiterhin der Mikrocontroller ausgestaltet ist, die Software für die PC-basierte speicherprogrammierbare Steuerung dem Rechensystem als eine auf dem Rechensystem ablauffähige fehlersichere Software zur Steuerung eines industriellen Prozesses zur Verfügung zu stellen.

2. Vorrichtung nach Anspruch 1,
wobei das erste Mittel (11) zur Erzeugung des ersten Zeitsignals als ein Quarzoszillator ausgelegt ist.

3. Vorrichtung nach Anspruch 1 oder 2,
weiterhin aufweisend ein zweites Mittel (12) zur Erzeugung eines zweiten Zeitsignals.

4. Vorrichtung nach Anspruch 3,
wobei das zweite Mittel (12) als eine Echtzeituhr (RTC) ausgestaltet ist.

5. Vorrichtung (1) nach einem der Ansprüche 1 bis 4, aufweisend ein Sicherungsmittel (6) zur Verschlüsselung zumindest des ersten Zeitsignals (11).

6. Vorrichtung (1) nach einem der Ansprüche 1 bis 5, aufweisend ein Mittel(7) zum Auslesen eines Lizenzierungsschlüssels.

7. Vorrichtung (1) nach einem der Ansprüche 1 bis 6, wobei das Steckmittel als ein USB-Anschluss ausgestaltet ist.

8. Vorrichtung (1) nach einem der Ansprüche 1 bis 7, aufweisend ein kompaktes Gehäuse (8).

9. Rechensystem (30) ausgestaltet als ein sicherheitsbezogenes Steuerungssystem für einen industriellen Prozess, umfassend eine Software zur Nachbildung einer speicherprogrammierbaren Steuerung, **gekennzeichnet durch** eine Vorrichtung (1) nach einem der Ansprüche 1 bis 8.

10. Rechensystem (30) nach Anspruch 9, wobei das Rechensystem (30) ein Standard-PC ist.

## Claims

1. Apparatus (1) comprising
a plug means (2) for plugging into a computation system (30),
a memory module (3),
the memory module (3) being able to be connected to a bus system (4) of the computation system (30) via the plug means (2),
furthermore having a microcontroller (5), and
a first means (11) for generating a first time signal, which interact in such a manner that the computation system (30) is provided with the first time signal via the plug means (2), the microcontroller (5) being configured to provide software, which can be executed on the computation system (30), with a time base which is independent of the computation system (30), **characterized in that** the memory module (3) has software for a PC-based programmable logic controller, the microcontroller being furthermore configured to provide the software for the PC-based programmable logic controller to the computation system as fail-safe software, which can be executed on the computation system and is intended to control an industrial process.

2. Apparatus according to Claim 1, the first means (11) for generating the first time signal being in the form of a crystal oscillator.

3. Apparatus according to Claim 1, furthermore having a second means (12) for generating a second time signal.

4. Apparatus according to Claim 3, the second means (12) being in the form of a real-time clock (RTC).

5. Apparatus (1) according to one of Claims 1 to 4, having a protection means (6) for encrypting at least the first time signal (11).

6. Apparatus (1) according to one of Claims 1 to 5, having a means (7) for reading a licensing key.

7. Apparatus (1) according to one of Claims 1 to 6, the plug means being in the form of a USB connection.

8. Apparatus (1) according to one of Claims 1 to 7, having a compact housing (8).

9. Computation system (30) in the form of a safety-related control system for an industrial process, comprising software for simulating a programmable logic controller,
**characterized by**
an apparatus (1) according to one of Claims 1 to 8.

10. Computation system (30) according to Claim 9, the computation system (30) being a standard PC.

## Revendications

1. Dispositif ( 1 ) comprenant
un moyen ( 2 ) d'introduction pour l'introduction dans un système ( 30 ) informatique,
un module ( 3 ) de mémoire,
dans lequel le module ( 3 ) de mémoire peut être relié à un système ( 4 ) de bus du système ( 30 ) informatique par le moyen ( 2 ) d'introduction,
ayant en outre une micro-unité ( 5 ) de commande et
un premier moyen ( 11 ) de production d'un premier signal de temps, qui coopèrent de manière à mettre, par le moyen ( 2 ) d'introduction, le premier signal de temps à disposition du système ( 30 ) informatique, l'unité ( 5 ) de micro-commande étant constituée pour mettre une base de temps indépendante du système ( 30 ) informatique à disposition d'un logiciel apte à se dérouler sur le système ( 30 ) informatique,
**caractérisé en ce que**
le module ( 3 ) de mémoire a un logiciel pour une commande programmable en mémoire basée sur un PC, dans lequel en outre l'unité de micro-commande est conformée pour mettre le logiciel pour l'automate programmable industriel sur la base d'un PC à disposition du système informatique comme logiciel, apte à se dérouler sur le système informatique et à l'épreuve d'erreur, de commande d'un processus industriel.

2. Dispositif suivant la revendication 1,
dans lequel le premier moyen ( 11 ) de production du premier signal de temps est conçu sous la forme d'un oscillateur à quartz.

3. Dispositif suivant la revendication 1 ou 2,
ayant en outre un deuxième moyen ( 12 ) de production d'un deuxième signal de temps.

4. Dispositif suivant la revendication 3,
dans lequel le deuxième moyen ( 12 ) est sous la forme d'une horloge ( RTC ) en temps réel.

5. Dispositif suivant l'une des revendications 1 à 4, ayant un moyen ( 6 ) de sécurité pour le chiffrement d'au moins le premier signal ( 11 ) de temps.

6. Dispositif suivant l'une des revendications 1 à 5, ayant un moyen ( 7 ) de sélection d'une clé d'autorisation.

7. Dispositif suivant l'une des revendications 1 à 6, dans lequel le moyen d'introduction est sous la forme d'une connexion USB.

8. Dispositif suivant l'une des revendications 1 à 7, ayant un boîtier ( 8 ) compact.

9. Système ( 30 ) informatique constitué sous la forme d'un système de commande de sécurité pour un processus industriel comprenant un logiciel de reproduction d'un automate programmable industriel, **caractérisé par** un dispositif ( 1 ) suivant l'une des revendications 1 à 8.

10. Système ( 30 ) informatique suivant la revendication 9, dans lequel le système ( 30 ) informatique est un PC standard.
